# FASCICULE DE BREVET EUROPEEN

(11) **EP 2 690 877 B1**
(45) Date de publication et mention de la délivrance du brevet: **14.09.2016**
(21) Numéro de dépôt: 13177862.3
(22) Date de dépôt: 24.07.2013
(51) Int. Cl.: H04N 21/436, H04N 21/443

(54) **Procédé d'activation d'un boîtier multimédia connecté à un boîtier d'accès à Internet**
Aktivierungsverfahren einer Multimedia-Box, die an eine Internetzugangsbox angeschlossen ist
Method for activating a multimedia device connected to an internet access device

(30) Priorité: 24.07.2012 FR 1257169
(43) Date de publication de la demande: 29.01.2014
(73) Titulaire: Bouygues Telecom, 75116 Paris (FR)
(72) Inventeur: Dauchy, Jérôme, 78470 Saint Rémy Lès Chevreuse (FR); Courselle, Clément, 59000 LILLE (FR)
(74) Mandataire: Regimbeau

(56) Documents cités:
- US-B1- 7 506 366
- Anonymous: "Tasker for Android - Profiles", , 13 mars 2011 (2011-03-13), XP055056538, Extrait de l'Internet: URL:http://tasker-profiles.blogspot.nl/201 1/03/auto-wake-on-lan-when-returning-home. html [extrait le 2013-03-14]
- "Schedule a WOL magic packet based on UPS status", , 29 décembre 2010 (2010-12-29), XP055056540, Extrait de l'Internet: URL:http://www.linksysinfo.org/index.php?t hreads/schedule-a-wol-magic-packet-based-o n-ups-status.33486/ [extrait le 2013-03-14]
- "Event triggers based on power consumption", , 8 mars 2009 (2009-03-08), XP055056542, Extrait de l'Internet: URL:http://forums.homeseer.com/showthread. php?p=862954 [extrait le 2013-03-14]

## Description

La présente invention concerne le domaine des boîtiers multimédia « Set-top Box », et vise plus précisément le démarrage de tels boîtiers.

### ETAT DE L'ART

L'accès à l'Internet est de nos jours couramment obtenu grâce à des équipements de type IAD (« Integrated Access Device ») proposés par les fournisseurs d'accès à Internet et communément appelés « box ».

Ces boîtiers d'accès à Internet permettent de connecter un client du fournisseur d'accès à son réseau opérateur qui fait l'interface avec le réseau Internet. Les boîtiers d'accès à Internet sont en cela des équipements de terminaison de réseau, ou « consumer edges » (CE). La connexion physique au réseau opérateur se fait le plus souvent via xDSL, câble, ou fibre optique.

Les fournisseurs d'accès à Internet mettent le plus souvent également à disposition de leurs clients un second équipement appelé « Set-top Box », en français boîtier STB ou boîtier multimédia. Cet équipement auxiliaire, relié à l'IAD et à un écran, offre par exemple des services de télévision IP ou de vidéo à la demande.

Contrairement aux boîtiers d'accès Internet, qui sont le plus souvent actifs 24h/24, les boîtiers multimédia sont si possible éteints lorsqu'ils ne sont pas utilisés pour réaliser des économies d'énergie.

En effet, les boîtiers multimédia n'ont besoin d'être en marche que lorsque l'utilisateur souhaite accéder à son service TV, alors qu'un boîtier d'accès Internet doit permettre à l'utilisateur de passer/recevoir des appels téléphoniques à tout instant.

Le problème est que le démarrage d'un boîtier multimédia est relativement long : le démarrage de l'interface utilisateur ainsi que l'initialisation de la connexion réseau avec le boîtier multimédia jusqu'au moment où le portail s'affiche à l'écran peuvent prendre près d'une minute. Cela a un impact certain sur l'expérience client puisque celui-ci doit patienter pour accéder à son service TV.

Pour réduire ce problème, les boîtiers multimédia du commerce ont en réalité deux niveaux de veille : une veille profonde et une veille superficielle (communément appelée « fausse veille ») dans laquelle seule la sortie vidéo est désactivée. En veille superficielle, le boîtier est d'apparence en veille profonde, mais le temps de redémarrage est sensiblement réduit puisque la majorité des composants sont déjà actifs, seules les interfaces de sorties étant inactives. La consommation reste toutefois relativement élevée.

Lorsqu'il n'est plus utilisé, le boîtier multimédia passe d'abord en « fausse veille », puis en veille profonde au bout d'un temps déterminé (par exemple 15 minutes) s'il n'a pas été de nouveau sollicité. Cela permet d'éviter dans certains cas un démarrage complet à l'utilisateur, mais l'efficacité reste très limitée puisque l'utilisateur aura toujours un démarrage complet lorsqu'il s'est absenté pendant un long moment (par exemple à chaque fois qu'il allumera son boîtier multimédia le soir en rentrant du travail).

Il serait ainsi intéressant de disposer d'une solution permettant dans tous les cas de diminuer sensiblement le temps de démarrage d'un boîtier multimédia, mais sans augmenter la consommation énergétique.

### PRESENTATION DE L'INVENTION

Selon un premier aspect, la présente invention se rapporte donc à un procédé d'activation d'un boîtier multimédia comme décrit dans la revendication 1.
- l'équipement est un ordinateur ou un terminal mobile connecté au boîtier d'accès à Internet ;
- ladite trame d'activation par le réseau est une trame Wake-on-LAN (WoL) ;
- ladite trame WoL est une trame de données Ethernet contenant les octets FF FF FF FF FF FF suivis de seize répétitions de l'adresse MAC du boîtier multimédia ;
- le boîtier multimédia communique au boîtier d'accès à Internet son adresse MAC lors d'une première association ;
- le boîtier multimédia est initialement dans un état de veille profonde dans lequel seule une carte réseau du boîtier multimédia est active ;
- le boîtier multimédia est connecté à un écran via une sortie vidéo, le boîtier multimédia passant, lorsqu'il reçoit la trame WoL, dans un état de veille superficielle dans lequel seule ladite sortie vidéo est inactive ;
- le boîtier multimédia repasse dans l'état initial de veille profonde si à l'expiration d'un délai déterminé il n'a ni été utilisé par l'utilisateur, ni reçu de trame WoL de la part du boîtier d'accès à Internet.

Selon un deuxième aspect, l'invention concerne un boîtier d'accès à Internet, connecté à un boîtier multimédia, le boîtier d'accès à Internet étant configuré pour la mise en oeuvre d'un procédé selon le premier aspect de l'invention.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 est un schéma d'une architecture de réseau dans lequel est mis en oeuvre un mode de réalisation du procédé selon l'invention ;
- la figure 2 représente un exemple de diagramme flux ou « call flow » entre les différents éléments du réseau lors de la mise en oeuvre d'un mode de réalisation du procédé selon l'invention.

### DESCRIPTION DETAILLEE

### Architecture réseau

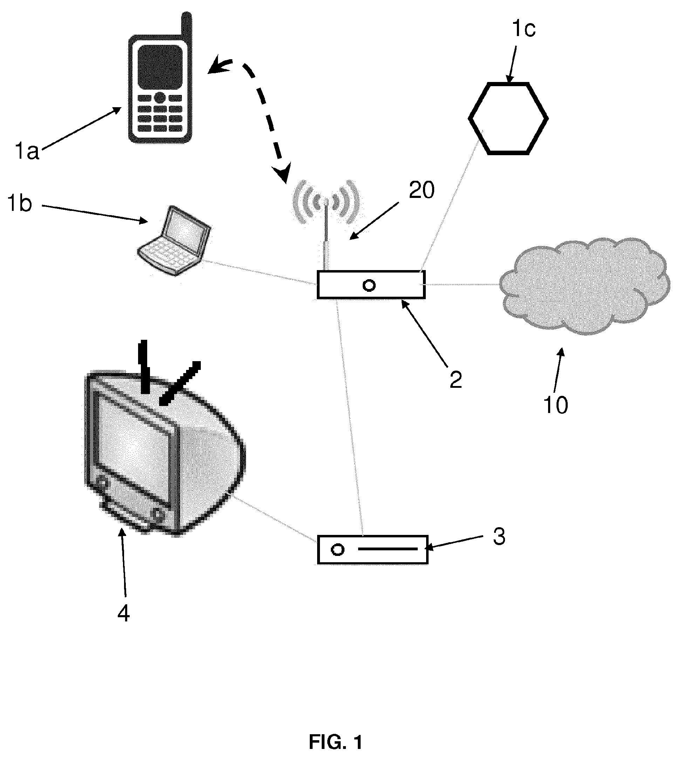

En référence aux dessins et en particulier à la figure 1 (qui représente plus spécifiquement un mode de réalisation de l'invention qui sera décrit plus loin), l'invention concerne une installation comprenant un boîtier d'accès à Internet 2 comprenant éventuellement des moyens de communication sans fil 20 (par exemple Wi-Fi) avec un ou plusieurs équipements 1 (voir plus loin), et un boîtier multimédia 3. Ces boîtiers 2 et 3 sont reliés par exemple par un câble Ethernet RJ45, une liaison Wi-Fi ou encore des boîtiers CPL (Courant porteur de ligne). Le boîtier multimédia 3 est lui-même avantageusement connecté à un écran 4 via une sortie vidéo (par exemple une interface HDMI (« High-Definition Multimedia Interface ») ou Péritel) afin de profiter des services associés.

Le boîtier 2 est représenté connecté au réseau Internet 10. Cette connexion est par exemple mise en oeuvre via le xDSL, la fibre optique (FTTH) ou encore le câble (FTTLA).

### Principe de l'invention

Plutôt que de chercher à modifier la procédure de démarrage complet du boîtier multimédia d'un foyer, les inventeurs ont cherché comment « l'anticiper ».

Il est en effet connu un standard Ethernet appelé « Wake on LAN » (WoL) qui permet de « réveiller » à distance un équipement connecté à un réseau, notamment le boîtier multimédia 3. Cette technologie permet une sortie de veille à la réception par la carte Ethernet d'un « paquet magique » WoL, qui sera décrit en détail plus loin.

Le brevet américain US7506366 propose ainsi par exemple un système pour entreprise dans lequel le paquet magique est envoyé au poste de travail d'un utilisateur lorsqu'il badge à l'entrée du lieu de travail. Ce système n'est toutefois pas applicable au sein d'un foyer.

La demande de brevet coréenne KR20090019094 propose quant à elle un système de réveil matin dans lequel le boîtier d'accès internet envoie à une heure prédéfinie le paquet magique au boîtier multimédia ainsi qu'à une télévision pour les réveiller et déclencher un réveil visuel et/ou sonore. On s'affranchit du déclencheur physique qu'est la badgeuse, mais ce système n'a pas d'intérêt à moins que l'utilisateur utilise son boîtier multimédia à heure fixe.

Tasker for Android - Profiles (http://tasker-profiles.blogspot.nl/2011/03/auto-wake-on-lan-when-returning-home.html) constitue l'art antérieur le plus proche. Ce document divulgue une astuce de configuration d'un téléphone Android permettant à ce dernier d'envoyer une trame d'activation à un PC lorsque le téléphone obtient l'état « WIFI connected ».

Le procédé selon l'invention consiste en une nouvelle utilisation d'une trame d'activation par le réseau, en particulier selon le standard WoL, pour réveiller le boîtier multimédia 3 lorsque l'utilisateur est susceptible de l'utiliser. Cette utilisation potentielle est ici détectée en observant tout usage d'un équipement 1a, 1b, 1c disposant d'une connectivité avec le boîtier d'accès à Internet 2 qui pourrait être caractéristique de la présence d'un utilisateur au sein dudit foyer. En référence à la figure 1 et à titre d'exemple, l'équipement 1a est un terminal mobile, l'équipement 1b est un ordinateur connecté à Internet via le boitier 2, et l'équipement 1c est un « autre » périphérique tel un volet roulant. On comprendra que l'invention n'est limitée à aucune configuration particulière d'équipements 1a, 1b, 1c.

Trois catégories d'usages caractéristiques de la présence d'un utilisateur au sein dudit foyer sont en particulier concernées par l'invention. On comprendra que l'invention peut prendre en compte une ou plusieurs à la fois de ces catégories, et n'est limitée par ailleurs à aucune d'entre elles.

### Mesures de consommation

Selon un premier mode de réalisation de l'invention, l'équipement 1a, 1b, 1c est un compteur d'électricité, d'eau ou de gaz, ledit usage de l'équipement 1a, 1b, 1c étant la mesure d'un profil de consommation caractéristique de la présence d'un utilisateur au sein dudit foyer.

Ce ou ces compteurs d'énergie (par énergie, on entend électricité, gaz et/ou eau) du foyer sont généralement reliés en permanence au boîtier d'accès à Internet 2. Alternativement, des capteurs sont placés sur les arrivées d'énergie informant le centre de domotique (soit le boîtier d'accès à Internet 2, soit un boîtier à part) de diverses consommations.

Le boiter 2 peut analyser la consommation en temps réel (en particulier les variations), de sorte à établir un profil de consommation en énergie reflétant l'activité du foyer.

On peut ainsi créer (en particulier par apprentissage) des profils typiques de comportements, dont un ou plusieurs profils correspondant à l'entrée d'une personne au sein du foyer. Par exemple, la nuit ou en journée (en l'absence des habitants du foyer), la consommation sera relativement constante avec des variations basse fréquence, contrairement à des périodes de présence, où la consommation sera plus élevée et plus chaotique.

Dès l'identification du passage d'un profil de consommation « faible » vers un profil associé à une consommation caractéristique de la présence d'un utilisateur au sein dudit foyer, le boîtier d'accès à Internet 2 envoie une trame d'activation (le paquet WoL) au boîtier multimédia 3.

### Activation d'un périphérique domotique

Selon un deuxième mode de réalisation de l'invention, l'équipement 1a, 1b, 1c est un périphérique domotique du foyer, ledit usage de l'équipement 1a, 1b, 1c étant un changement d'un état du périphérique (plus précisément de la valeur d'un paramètre décrivant l'état) caractéristique de la présence d'un utilisateur au sein dudit foyer.

Par périphérique domotique, on entendra un équipement tel qu'une alarme, une porte de garage, des volets roulants, des interrupteurs, des radiateurs, un détecteur de mouvement, etc. qui soit connecté soit directement au boîtier d'accès à internet 2, soit à un boîtier central lui-même relié au boîtier d'accès à internet 2. Un périphérique domotique est configuré pour envoyer (à intervalle réguliers, à chaque changement d'état, ou sur requête du boîtier d'accès à Internet 2 ou de la centrale de domotique) un message au boîtier d'accès à Internet (ou à la centrale de domotique) l'informant de son état (par état on entendra des informations mesurables telles que « ouvert » ou « fermé », une température, une position, etc., et stockables sous la forme d'un paramètre du périphérique).

Le boîtier d'accès à Internet 2 étant le « centre de supervision » des équipements domotiques du foyer (ou étant connecté au boîtier central de domotique), l'état de chaque équipement est connu du boîtier d'accès à internet 2.

On peut donc envisager plusieurs scénarios caractéristiques de l'entrée de quelqu'un dans le foyer.

Exemple : Ouverture de la porte de garage, désactivation de l'alarme, allumage des lumières, mise en route du chauffage, ouverture des volets, détection de sons, détection de mouvements...

Lorsque le boîtier d'accès à Internet 2 détecte un tel scénario, il envoie la trame d'activation au boîtier multimédia 3.

### Tentatives de connexion

Selon un troisième mode (préféré) de réalisation de l'invention, ledit usage d'un équipement 1a, 1b, 1c est une tentative d'accès réseau via le boîtier d'accès à Internet 2 depuis l'équipement 1a, 1 b, 1 c.

En effet, tant que l'utilisateur d'une ligne Internet est absent de chez lui ou endormi (périodes où l'on peut considérer qu'il n'utilise pas son boîtier multimédia 3), alors aucune tentative d'accès réseau ne sera entreprise depuis un équipement informatique 1a, 1b, 1c disposant d'une connectivité (cette caractéristique sera détaillée plus loin) avec son boîtier d'accès Internet 2.

Par contre, lorsqu'il rentre chez lui, le smartphone 1a (terminal mobile) de l'utilisateur va peut-être se connecter à son réseau Wi-Fi. En outre il y a de grandes chances qu'il allume ou sorte de veille son ordinateur 1b. Il peut également par exemple relever ses courriers électroniques sur une tablette tactile.

Toutes ces actions entraînent automatiquement de la part de l'équipement 1a, 1b, 1c une tentative d'accès réseau transmise au boîtier d'accès Internet 2.

On comprendra que par équipement 1a, 1b, 1c, on désigne tout périphérique réseau, y compris des imprimantes, des consoles, des appareils photos, etc. pouvant être inclus dans le réseau LAN (« Local Access Network », réseau local) centré sur le boîtier d'accès à Internet 2, et que par équipement « disposant d'une connectivité », on entend disposant d'une interface réseau apte à communiquer, éventuellement par intermittence, avec le boîtier 2 ou tout équipement du LAN. En d'autres termes, l'équipement est « connectable », mais pas forcément « connecté ».

Il peut ainsi s'agir comme expliqué d'équipements fixes reliés physiquement en permanence (par exemple un ordinateur 1 b relié au boîtier d'accès à Internet 2 via un câble), d'équipements mobiles disposant des identifiants de connexion Wi-Fi (un smartphone ou une tablette 1a), mais pas uniquement : par exemple, on peut imaginer que l'utilisateur possède un ordinateur portable auquel il branche un câble Ethernet en arrivant chez lui. En cela c'est un équipement disposant d'une connectivité puisque dès que le câble sera branché il pourra tenter de se connecter au réseau. Au contraire, le smartphone d'un autre utilisateur ne disposant pas des identifiants du réseau Wi-Fi généré par le boîtier 2 n'est pas considéré comme disposant d'une connectivité avec ce boîtier d'accès à Internet 2.

Une tentative d'accès consiste plus particulièrement en l'envoi d'une requête DHCP (« Dynamic Host Control Protocol », protocole de contrôle dynamique des hôtes). En effet, les boîtiers d'accès à Internet 2 fonctionnent le plus souvent avec des adresses IP (« Internet Protocol ») dynamiques attribuées pour une durée limitée. La requête DHCP émise par l'équipement 1a, 1b, 1c est une demande d'adresse IP auprès du boîtier d'accès à Internet dans le but de fournir le service demandé par l'utilisateur. L'envoi d'une requête DHCP au boîtier 2 coïncide la plupart du temps soit avec l'ouverture d'un canal de connexion (branchement d'un câble réseau, entrée dans la zone d'émission du Wi-Fi), soit avec la sortie de veille d'un équipement déjà connecté.

Lorsque une tentative d'accès réseau (par exemple une requête DHCP) depuis un équipement 1a, 1b, 1c qui cherche à se connecter au boîtier d'accès à Internet 2 est détectée par le boîtier d'accès à Internet 2, on peut ainsi supposer que l'utilisateur est présent chez lui et qu'il va éventuellement vouloir utiliser son boîtier multimédia 3, par exemple pour regarder la télévision. Le boîtier d'accès à Internet 2 déclenche alors l'activation du boîtier multimédia 3 par l'émission d'une trame d'activation par le réseau, avantageusement une trame WoL.

### Trame WoL

Le réveil du boîtier multimédia 3 s'effectue quand sa carte réseau reçoit la trame WoL (appelée « paquet magique ») mentionnée précédemment. Cette trame WoL « paquet magique » est une trame de données Ethernet contenant les octets FF FF FF FF FF FF suivis de seize répétitions de l'adresse MAC (« Médium Access Control », ou contrôle d'accès au support) du boîtier multimédia 3. Il s'agit d'un identifiant physique (6 octets) stocké dans la carte réseau du boîtier multimédia 3 de sorte à lui attribuer une adresse unique.

Afin que le boîtier d'accès à Internet 2 dispose de cette adresse MAC, le boîtier multimédia 3 lui transmet avantageusement lors de leur première association (ou « appariement »), c'est-à-dire la première fois qu'ils échangent des données.

### Niveaux de veille

Comme expliqué précédemment, le boîtier multimédia 3 est initialement dans un état de veille profonde. Dans cet état, le boîtier multimédia est avantageusement complètement inactif à l'exception de sa carte réseau (laquelle possède l'adresse MAC mentionnée), de sorte à pouvoir recevoir la trame WoL.

Un bus (PCI par exemple) connectant la carte réseau et la carte mère du boîtier multimédia 3 permet l'amorce du démarrage.

Une fois qu'il reçoit la trame WoL, le boîtier multimédia 3 ne démarre toutefois avantageusement que partiellement, de sorte à passer dans l'état de veille superficielle (ou « fausse veille ») décrit précédemment, dans lequel seule ladite sortie vidéo est inactive (tout le reste du boîtier 3 étant actif). Le boîtier a ainsi toujours l'apparence d'être en veille et ne gêne pas l'utilisateur si par exemple il a laissé son écran 4 allumé.

Si l'utilisateur souhaite alors utiliser son boîtier multimédia 3, le démarrage lui semblera très court, puisque le boîtier 3 n'a qu'à démarrer l'affichage vidéo avant d'être complètement opérationnel. Son expérience sera ainsi optimale.

### Retour en veille

Pour minimiser les impacts de consommation, le boîtier multimédia 3 repasse avantageusement dans l'état initial de veille profonde si pendant un délai déterminé (par exemple 15 minutes, mais l'homme du métier saura l'adapter aux comportements de l'utilisateur) il n'a ni été utilisé par l'utilisateur, ni reçu de nouvelle trame WoL de la part du boîtier d'accès à Internet 2.

Si une nouvelle trame WoL est reçue, ce qui signifie que l'utilisateur est toujours présent (et est donc susceptible d'utiliser la télévision), le boîtier multimédia 3 relance le délai avant passage de veille superficielle à veille profonde.

### Exemple de diagramme flux

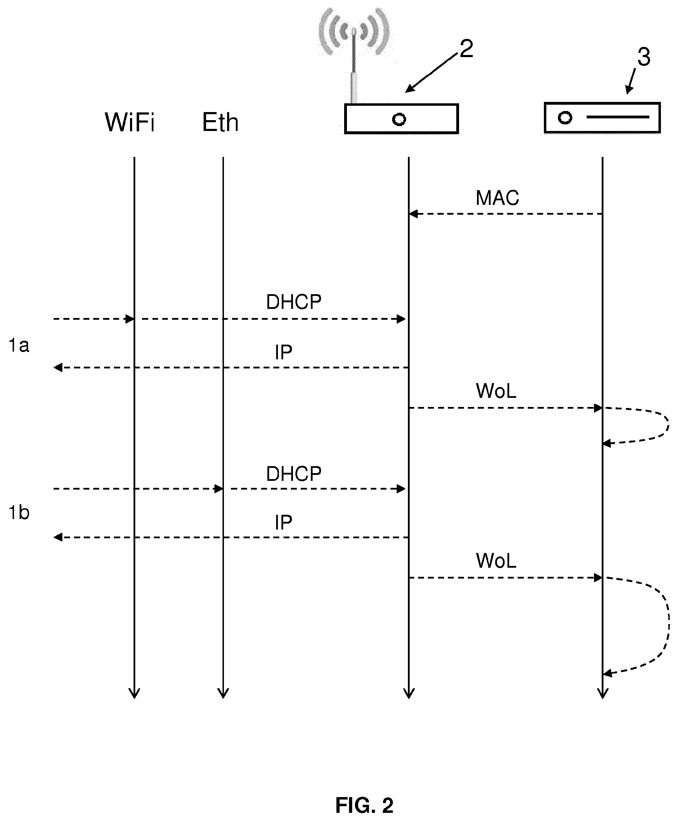

En référence à la figure 2, un exemple de mise en oeuvre du troisième mode de réalisation du procédé selon l'invention est représenté.

Initialement (lors de la première connexion), le boîtier multimédia 3 transmet son adresse MAC au boîtier d'accès à Internet 2.

Ensuite est représenté un exemple de tentative d'accès via le Wi-Fi par un équipement 1a, typiquement le smartphone de l'utilisateur qui rentre chez lui le soir. Suite à la requête DHCP, une adresse IP est fournie au smartphone, et la trame WoL est émise au boîtier multimédia 3.

Ce dernier passe en fausse veille, puis retombe en veille profonde à l'expiration du délai pré-déterminé, l'utilisateur étant par exemple allé se coucher sans utiliser son boîtier multimédia.

Le lendemain matin, l'utilisateur se lève et va relever ses mails sur son ordinateur (équipement 1 b, connecté au boîtier d'accès à Internet par liaison Ethernet). Cette action entraîne également l'émission d'une requête DHCP puisque la connexion internet de l'ordinateur n'a pas été utilisée depuis plusieurs heures. Une requête WoL est émise pour réveiller à nouveau le boîtier multimédia 3. Cette fois l'utilisateur allume son écran 4 pour regarder les informations. Le boîtier multimédia passe de l'état « fausse veille » à l'état d'activité complète (il allume sa sortie vidéo) d'où un démarrage très rapide pour l'utilisateur. L'utilisateur part ensuite au travail et presse le bouton veille de sa télécommande : le boîtier multimédia 3 coupe sa sortie vidéo et passe en « fausse veille ». En l'absence de nouvelle trame WoL (puisque l'utilisateur est absent), le boîtier 3 passe en veille profonde à l'expiration du délai prédéterminé.

## Revendications

1. Procédé d'activation d'un boîtier multimédia (3) connecté à un boîtier d'accès à Internet (2) d'un foyer, **caractérisé en ce qu'**il comprend des étapes de :
- Déclenchement de l'activation du boitier multimédia (3) par le boîtier d'accès à Internet (2) par l'émission d'une trame d'activation par le réseau au boîtier multimédia (3) lorsque le boîtier d'accès à Internet (2) détecte l'envoi d'une requête DHCP au boîtier d'accès à Internet (2) depuis un équipement (1a, 1b, 1c) disposant d'une connectivité avec le boîtier d'accès à Internet (2).

2. Procédé selon l'une des revendications précédentes, dans lequel l'équipement (1 a, 1 b, 1 c) est un ordinateur (1 b) ou un terminal mobile (1a) connecté au boîtier d'accès à Internet (2).

3. Procédé selon l'une des revendications précédentes, dans lequel ladite trame d'activation par le réseau est une trame Wake-on-LAN (WoL)

4. Procédé selon la revendication précédente, dans lequel ladite trame WoL est une trame de données Ethernet contenant les octets FF FF FF FF FF FF suivis de seize répétitions de l'adresse MAC du boîtier multimédia (3).

5. Procédé selon la revendication précédente, dans lequel le boîtier multimédia (3) communique au boîtier d'accès à Internet (2) son adresse MAC lors d'une première association.

6. Procédé selon l'une des revendications précédentes, dans lequel le boîtier multimédia (3) est initialement dans un état de veille profonde dans lequel seule une carte réseau du boîtier multimédia (3) est active.

7. Procédé selon la revendication précédente, dans lequel le boîtier multimédia (3) est connecté à un écran (4) via une sortie vidéo, le boîtier multimédia (3) passant, lorsqu'il reçoit la trame WoL, dans un état de veille superficielle dans lequel seule ladite sortie vidéo est inactive.

8. Procédé selon l'une des revendications 6 et 7, dans lequel le boîtier multimédia (3) repasse dans l'état initial de veille profonde si à l'expiration d'un délai déterminé il n'a ni été utilisé par l'utilisateur, ni reçu de trame WoL de la part du boîtier d'accès à Internet (2).

9. Boîtier d'accès à Internet (2), connecté à un boîtier multimédia (3), **caractérisé en ce que** le boîtier d'accès à Internet (2) est configuré pour la mise en oeuvre d'un procédé selon l'une des revendications précédentes.

## Patentansprüche

1. Verfahren zum Aktivieren eines Multimediagehäuses (3), das an eine Internet-Zugangsbox (2) eines Haushalts angeschlossen ist, **dadurch gekennzeichnet, dass** es die folgenden Schritte umfasst:
- Auslösen der Aktivierung des Multimediagehäuses (3) durch die Internet-Zugangsbox (2) durch Aussendung eines Aktivierungsframes durch das Netzwerk an das Multimediagehäuse (3), wenn die Internet-Zugangsbox (2) das Senden einer DHCP-Anfrage an die Internet-Zugangsbox (2) von einer Ausstattung (1a, 1b, 1c), die über eine Konnektivität mit der Internet-Zugangsbox (2) verfügt, erfasst.

2. Verfahren nach einem der vorhergehenden Ansprüche, wobei die Ausstattung (1a, 1b, 1c) ein Rechner (1b) oder ein mobiles Endgerät (1a) ist, der/das an die Internet-Zugangsbox (2) angeschlossen ist.

3. Verfahren nach einem der vorhergehenden Ansprüche, wobei der Aktivierungsframe durch das Netzwerk ein Wake-on-LAN (WoL) ist.

4. Verfahren nach dem vorhergehenden Anspruch, wobei der WoL-Frame ein Ethernet-Datenframe ist, der die Bytes FF FF FF FF FF FF gefolgt von sechzehn Wiederholungen der MAC-Adresse des Multimedia-Gehäuses (3) ist.

5. Verfahren nach dem vorhergehenden Anspruch, wobei das Multimedia-Gehäuse (3) der Internet-Zugangsbox (2) seine MAC-Adresse bei einer ersten Assoziation kommuniziert.

6. Verfahren nach einem der vorhergehenden Ansprüche, wobei das Multimedia-Gehäuse (3) ursprünglich in einem tiefen Standbyzustand ist, in dem nur eine Netzwerkkarte des Multimedia-Gehäuses (3) aktiv ist.

7. Verfahren nach dem vorhergehenden Anspruch, wobei das Multimedia-Gehäuse (3) an einen Bildschirm (4) über einen Videoausgang angeschlossen ist, wobei das Multimedia-Gehäuse (3), wenn es den WoL-Frame empfängt, in einen oberflächlichen Standbyzustand übergeht, in dem nur der Videoausgang inaktiv ist.

8. Verfahren nach einem der Ansprüche 6 und 7, wobei das Multimedia-Gehäuse (3) in den ursprünglichen tiefen Standbyzustand übergeht, wenn es nach dem Ablaufen einer bestimmten Frist weder von dem Benutzer verwendet wurde noch den WoL-Frame von der Internet-Zugangsbox (2) empfangen hat.

9. Internet-Zugangsbox (2), die an ein Multimediagehäuse (3) angeschlossen ist, **dadurch gekennzeichnet, dass** die Internet-Zugangsbox (2) für das Umsetzen eines Verfahrens nach einem der vorhergehenden Ansprüche konfiguriert ist.

## Claims

1. Method for activating a multimedia device (3) connected to an internet access device (2) of a household, **characterised in that** it comprises the steps of:
- Triggering the activation of the multimedia device (3) by the Internet access device (2) by the emitting of an activation frame by the network to the multimedia device (3) when the Internet access device (2) detects the sending of a DHCP request to the Internet access device (2) from a piece of equipment (1a, 1b, 1c) having connectivity with the Internet access device (2).

2. Method according to one of the preceding claims, wherein the equipment (1a, 1b, 1c) is a computer (1b) or a mobile terminal (1a) connected to the Internet access device (2).

3. Method according to one of the preceding claims, wherein said activation frame by the network is a Wake-on-LAN (WoL) frame.

4. Method as claimed in the preceding claim, wherein said WoL frame is an Ethernet data frame containing the bytes FF FF FF FF FF FF followed by sixteen repetitions of the MAC address of the multimedia device (3).

5. Method as claimed in the preceding claim, wherein the multimedia device (3) communicates to the Internet access device (2) its MAC address during a first association.

6. Method according to one of the preceding claims, wherein the multimedia device (3) is initially in a deep sleep mode wherein only a network card of the multimedia device (3) is active.

7. Method as claimed in the preceding claim, wherein the multimedia device (3) is connected to a screen (4) via a video output, with the multimedia device (3) switching, when it receives the WoL frame, into a superficial standby mode wherein only said video output is inactive.

8. Method according to one of claims 6 and 7, wherein the multimedia device (3) switches back to the initial deep sleep mode if after the expiration of a determined period of time it has not been used by the user and has not received a WoL frame from the Internet access device (2).

9. Internet access device (2), connected to a multimedia device (3), **characterised in that** the Internet access device (2) is configured for the implementing of a method according to one of the preceding claims.
